# EUROPÄISCHE PATENTSCHRIFT

(11) **EP 1 455 399 B1**
(45) Veröffentlichungstag und Bekanntmachung des Hinweises auf die Patenterteilung: **30.04.2008**
(21) Anmeldenummer: 04004634.4
(22) Anmeldetag: 01.03.2004
(51) Int. Cl.: H01M 2/02, C08J 5/18, B32B 27/30, G09F 3/03

(54) **Kunststoff-Folie aus Hartpolyvinylchlorid (HPVC) und Verfahren zu ihrer Herstellung**
Resin film made of hard polyvinylchloride (hpvc) and method for its production.
Feuille polymère en polychlorure de vinyle dûre et sa méthode de fabrication.

(30) Priorität: 07.03.2003 DE 10309918
(43) Veröffentlichungstag der Anmeldung: 08.09.2004
(73) Patentinhaber: Klöckner Pentaplast GmbH & Co. KG, 56412 Heiligenroth (DE)
(72) Erfinder: Van Rijn, Cor, 6026 AA Cronendonck (NL); Ras, Peter, 84489 Burgkirchen (DE); Thijs, Hans, 6136 AC Sittard (NL)
(74) Vertreter: Zounek, Nikolai

(56) Entgegenhaltungen:
- DE-A- 3 322 309
- US-A- 5 747 192

## Beschreibung

Die Erfindung betrifft eine kalandrierte Kunststoff-Folie aus Hartpolyvinylchlorid (HPVC), geeignet als Trägerfolie für auf Umfangsflächen von Zylinderkörpern aufklebbare und aufschrumpfbare Rundumetiketten und ein Verfahren zu ihrer Herstellung.

Derartige Kunststoff-Folien bilden die Basis- bzw. Trägerfolien für Schrumpfetiketten, die beispielsweise auf zylindrische Batterien wie Trockenbatterien aufgeschrumpft werden. Derartige Schrumpfetiketten müssen dabei größenmäßig auf eine vorgegebene Endkonfiguration, entsprechend dem Umfang und den Stirnflächen der zylindrischen Batterien durch Erwärmen aufschrumpfen. Dabei muss der Kleber, mit dem das Schrumpfetikett entlang dem Umfang aufgeklebt wird, dieser Schrumpfkraft standhalten

An derartige Basis- bzw. Trägerfolien werden hohe Anforderungen im Hinblick auf die Schrumpfeigenschaften, die Optik, die Planlage, die Lochzahl, Bedruckbarkeit und möglichst wenigen Oberflächendefekten gestellt.

Aus der US-A 5 747 192 ist eine monoaxial orientierte Polymerfolie als Träger für ein Haftetikett bekannt, das eine Breite von etwa 30 bis 100 mm hat. Dabei kann es sich um eine PVC-Folie handeln, die in Maschinenlaufrichtung monoaxial 20 bis 60 % gestreckt ist. Die bekannte PVC-Folie ist nicht kalandriert und es finden sich keine Angaben bei welcher Temperatur und über welche Zeitspanne ein Schrumpf in Längs- und Querrichtung auftritt. Ebensowenig findet sich ein Hinweis über die Temperaturbedingungen beim monoaxialen Recken der Folie.

Im Stand der Technik sind schrumpfbare PVC-Folien gemäß dem US-Patent 4 911 994, korrespondierend zu dem deutschen Patent DE 34 30 162 C2, und dem DE-Patent 33 22 309 C3 bekannt.

So beschreibt das DE-Patent 33 22 309 C3 eine auf eine Umfangsfläche eines Körpers einer Trockenbatterie aufklebbares und aufschrumpfbares mehrschichtiges zusammenklebbares Rundumetikett, mit einem rückseitig mit einer Haftklebstoffschicht versehenen Träger, auf dessen Oberseite sich eine Schutzschicht befindet. Der Träger enthält wenigstens eine in Umfangsrichtung des Körpers gereckte schrumpfbare Kunststoff-Folie aus Hartpolyvinylchlorid. Die Schutzschicht besteht aus einer in Umfangsrichtung des Körpers gereckten, schrumpfbaren durchsichtigen Abdeckfolie. Ein Aufdruck befindet sich auf der zur Abdeckfolie weisenden Seite des Trägers. Die Abdeckfolie ist mittels einer Kaschierklebeschicht auf den Aufdruck aufgeklebt. Auf die Kunststoff-Folie ist eine durch die Abdeckfolie hindurch sichtbare Materialschicht aufgedampft. Die Abdeckfolie steht in Axialrichtung der Umfangsfläche des Körpers mit Randbereichen über beide Ränder des Trägers über.

In der EP-B 0 176 704 ist ein ähnlich aufgebautes Schrumpfetikett beschrieben, bei dem der Träger in der Nähe seines sich längs einer Mantellinie der Umfangsfläche des Körpers erstreckenden Kante mit wenigstens einer Schnittstanzung versehen ist. Die Kante überdeckt nach dem Aufschrumpfen des Schrumpfetiketts die zu ihr parallele Kante.

Aus keiner der genannten Dokumente ist ein Maß für die Änderung der Dimension einer Kunststoff-Folie aus PVC durch das Aufschrumpfen auf einen Zylinderkörper bekannt.

In der EP-B1 0 578 750 sind Schrumpfetikette aus Polypropylen beschrieben, wobei der Polypropylenfilm bei erhöhten Temperaturen in einer Dimension um 20 % oder mehr wärmeschrumpfen kann. Der Anfangs-Schrumpffaktor beträgt zwischen 20 und 50 % bei Temperaturen im Bereich von 116 bis 138 °C. Polypropylen bringt verschiedene Probleme mit sich, beispielsweise beim Aufdrucken von Darstellungen, beim Aufdampfen von Metallschichten und beim Aufbringen von Klebstoffen. Es sind spezielle Behandlungen erforderlich, damit die voranstehend genannten Materialien auf Polypropylen haften. Dadurch wird die Herstellung von Rundumetiketten im Vergleich mit Etiketten auf PVC-Basis verteuert. So ist es erforderlich für die Metallisierung eine Seite des Polypropylens Corona zu behandeln, während die andere Seite des Polypropylens, auf der Klebstoff aufgebracht wird, ebenfalls coronabehandelt werden muss, jedoch mit einer zu der Coronabehandlung für die Metallisierung unterschiedlichen Corona-Leistung. Zum Bedrucken von Polypropylen muss eine Grundierung bzw. Oberflächenbeschichtung angewandt werden.

Diese Probleme sind bei der Verwendung von Kunststoff-Folien aus Polyvinylchlorid wesentlich geringer als bei Polypropylen.

Aufgabe der Erfindung ist es, eine kalandrierte Kunststoff-Folie aus Polyvinylchlorid für Schrumpfetiketten der eingangs beschriebenen Art bereit zu stellen, die beim thermischen Schrumpfen eine hohe Maßänderung in ihrer Längsrichtung aufweist.

Im Rahmen dieser Aufgabe soll die Maßänderung in Querrichtung beim thermischen Schrumpfen der Kunststoff-Folie sehr gering sein.

Diese Aufgabe wird erfindungsgemäß in der Weise gelöst, dass die Kunststoff-Folie eine Foliebreite bis zu 2100 mm hat, in Maschinenlaufrichtung eines Kalanders bei einer Temperatur von 60 °C bis 180 °C gereckt ist und einen positiven thermischen Schrumpf von 40 bis 60% bei einer Temperatur von 115 °C bis 125 °C über eine Zeitspanne von 15 Minuten in ihrer zur Maschinenlaufrichtung parallelen Laufrichtung aufweist.

In Weiterbildung der Erfindung weist sie quer zur Maschinenlaufrichtung des Kalanders bei einer Temperatur von 115 °C bis 125 °C über eine Zeitspanne von 15 Minuten einen negativen thermischen Schrumpf von 0 bis 10 % auf. Zweckmäßigerweise beträgt quer zur Maschinenlaufrichtung des Kalanders ein positiver thermischer Schrumpf der Kunststoff-Folie 0 bis 2 %. Die Messung des Schrumpfes findet bevorzugt in Luft statt, weniger üblich ist es den Schrumpf in Wasser zu messen, wobei dann jedoch die Messzeit erheblich kürzer und die Temperatur niedriger gewählt werden.

Eine thermische Reckung der Kunststoff-Folie quer zur Maschinenlaufrichtung des Kalanders ist vorzugsweise gleich null.

In Ausgestaltung der Erfindung beträgt die Dicke der Kunststoff-Folie 22,5 bis 66 µm.

Die weitere Ausgestaltung der kalandrierten Kunststoff-Folie nach der Erfindung ergibt sich aus den Merkmalen der Patentansprüche 7 bis 14.

Ein Verfahren zum Kalandrieren und thermischen Recken einer Kunststoff-Folie als Hartpolyvinylchlorid (HPVC) zeichnet sich dadurch aus, dass die Reckung in Maschinenlaufrichtung des Kalanders bei einer Temperatur von 60 °C bis 180 °C vorgenommen wird und dass die Dimensionsänderung in Längsrichtung der Kunststoff-Folie 40 bis 60 % der Länge der ungereckten Kunststoff-Folie beträgt.

Verfahrensgemäß wird während der thermischen Reckung in Maschinenlaufrichtung die Kunststoff-Folie in Querrichtung fixiert. Dies geschieht in der Weise, dass die Kunststoff-Folie durch Anpressen gegen Transportrollen, über die sie geführt wird, in ihrer Querrichtung fixiert wird. In Ausführung des Verfahrens wird durch die thermische Reckung in Maschinenlaufrichtung, die mit der Längsrichtung der Kunststoff-Folie übereinstimmt und die Fixierung der Kunststoff-Folie in Querrichtung, ein negativer thermischer Schrumpf in Querrichtung von 0 bis 10 % der Breite der ungereckten Kunststoff-Folie eingestellt. Es wird dadurch der Vorteil erzielt, dass in Querrichtung der Kunststoff-Folie eine definierte positive Maßänderung erzielt wird, ohne dass eine Querstreckanlage eingesetzt werden muss. Ein positiver Schrumpf von 0 bis 2 % wird dadurch erzielt, dass Anpressrollen, die gegen die Transportrollen anliegen, nach außen schräg gestellt sind, d. h. nicht parallel zur Maschinenlaufrichtung ausgerichtet sind.

Die Erfindung wird im Folgenden an Hand von zeichnerisch dargestellten Ausführungsbeispielen näher erläutert. Es zeigen:
- Fig. 1: einen Querschnitt durch eine erste Ausführungsform einer zweilagigen Kunststoff-Folie, auf deren Oberseite eine Abdeckfolie auflaminiert ist,
- Fig. 2: einen Querschnitt durch eine zweite einlagige Ausführungsform einer Kunststoff-Folie,
- Fig. 3: einen Querschnitt durch eine dritte einlagige Ausführungsform einer Kunststoff-Folie,
- Fig. 4: ein Detail des Transportweges der Kunststoff-Folie während der Reckung der Kunststoff-Folie in Maschinenlaufrichtung des Kalanders, und
- Fig 5: eine perspektivische Ansicht eines Rundumetiketts, das als Trägerfolie die Kunststoff-Folie gemäß Fig. 1 oder 2 aufweist, vor dem Umwickeln eines Zylinderkörpers.

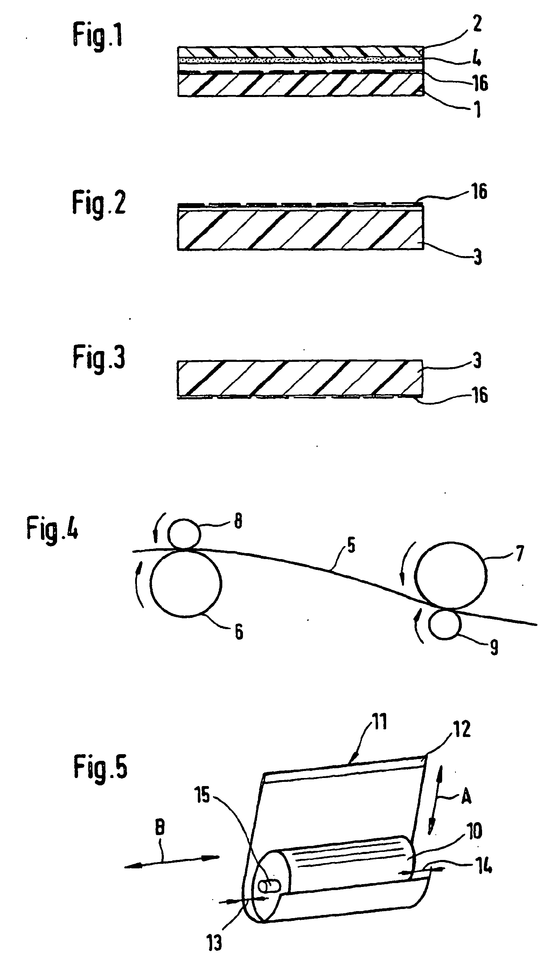

In Fig. 1 ist eine Kunststoff-Folie 1 dargestellt, auf die mittels einer Klebeschicht 4 eine Abdeckfolie 2 auflaminiert ist. Die Kunststoff-Folie 1 besteht aus einer kalandrierten Hartpolyvinylchlorid (HPVC)-Folie. Die Dicke der Kunststoff-Folie 1 liegt im Bereich von 25 bis 40 µm, insbesondere hat die Folie eine Dicke von 25 µm, 35 µm oder 37 µm. Die Abdeckfolie 2 besteht gleichfalls aus Hartpolyvinylchlorid und ihre Dicke liegt im Bereich von 10 bis 25 µm. Im Einzelnen gilt, dass bei einer Dicke von 25 µm der Kunststoff-Folie 1 die Abdeckfolie 2 eine Dicke von 25 µm hat. Bei einer Dicke von 35 µm der Kunststoff-Folie 1 hat die Abdeckfolie 2 eine Dicke von 20 µm. Ist die Kunststoff-Folie 37 µm dick, dann beträgt die Dicke der Abdeckfolie 10 bis 20 µm. Die Kunststoff-Folie ist auf ihrer Oberseite mit einem Druck 16 versehen.

Fig. 2 zeigt eine Kunststoff-Folie 3, die eine Monofolie ist und eine Dicke von 50 bis 60 µm besitzt. Diese Kunststoff-Folie 3 besteht ebenso wie die Kunststoff-Folie 1 aus Hartpolyvinylchlorid. Eine Abdeckfolie ist für die Kunststoff-Folie 3 nicht erforderlich. Die Oberseite der Kunststoff-Folie 3 ist metallisiert und gleichfalls mit einem Druck 16 versehen.

Die in Fig. 3 dargestellte Kunststoff-Folie 3 ist eine Monofolie mit einer Dicke von 50 bis 60 µm und besteht aus Hartpolyvinylchlorid. Die Folie 3 ist nicht metallisiert und ihre Unterseite weist einen Druck 16 auf.

Aus den in den Figuren 1 bis 3 gezeigten Ausführungsformen der Kunststoff-Folien werden Rundumetiketten gefertigt, die beispielsweise mit der Unterseite auf zylindrische Gegenstände aufgeklebt werden.

Die Folienbreiten betragen bis zu 2010 mm. Die Kunststoff-Folien 1 und 3 haben somit einen Dickenbereich von 25 bis 60 µm, mit einer Dickentoleranz von ± 10 %, so dass die tatsächlichen Dicken der Kunststoff-Folien 1 und 3 von 22,5 bis 66 µm reichen können.

An die Kunststoff-Folien 1 und 3 werden hohe Anforderungen im Hinblick auf ihre Schrumpfeigenschaften, Optik, ihre Planlage, ihre Lochfreiheit, das Bedrucken der Folie, das Kaschieren des bedruckten Folie und ihre Metallisierung gestellt, wenn sie als Trägerschichten für Rundumetikette zum Einsatz kommen.

Es wird ein Schrumpf für das Umschrumpfen eines Zylinderkörpers, beispielsweise einer zylindrischen Trockenbatterie, in Längsrichtung der Kunststoff-Folie benötigt, der im Bereich von 40 bis 60 % liegen muss. Bekannterweise wird ein thermischer Schrumpf einer Kunststoff-Folie durch Recken bei erhöhten Temperaturen und anschließendes Abschrecken der Folie bzw. sehr rasches Absenken der Temperatur erzeugt. Wird danach eine derartige schrumpfbare Kunststoff-Folie erwärmt, so schrumpft sie in Reckrichtung. Die Maßänderung in Querrichtung der Kunststoff-Folien 1 und 3 während des thermischen Schrumpfens soll möglichst klein sein und den Bereich von 0 bis 10 % der Breite der ungereckten Kunststoff-Folien 1 und 3 nicht überschreiten.

Die Klebeschicht 4 in Fig. 1 besteht aus einem flexiblen Kleber, der eine sichere Befestigung der Abdeckfolie auf der Kunststoff-Folie 1 während des Schrumpfens gewährleistet. Hierfür können Kontaktkleber einschließlich Kleber auf Gummibasis oder auf Acrylbasis verwendet werden.

Da die Kunststoff-Folien 1 und 3 im Allgemeinen auf einer Seite metallisiert werden, muss die Anzahl von Oberflächenfehlern, die sich nie vollständig vermeiden lassen, möglichst klein oder nur sehr gering sein. Zu solchen Oberflächenfehlern zählen Stippen, schwarze Punkte, Eindrücke und Kratzer. Derartige Fehler werden durch die Metallisierung deutlich erkennbar.

Die Metallisierung und Beschichtung der Kunststoff-Folien 1 und 3 findet über die Gesamtbreite von bis zu 2000 mm der Folien statt und daher sind die Anforderungen an die Planlage sehr hoch.

Ist die Planlage der Folie zu gering, so ergeben sich Unregelmäßigkeiten in der Metallisierung und Beschichtung und jeder weitere Verarbeitungsschritt führt zu einer weiteren Verschlechterung des Aussehens der Folien und somit erhöht sich dann die Ausschussrate der Folien.

In dem vorgegebenen Dickenbereich der Kunststoff-Folien 1 und 3 ist aus Hartpolyvinylchlorid eine absolut lochfreie Folie nicht herzustellen. Löcher führen insbesondere zu Problemen bei der Beschichtung und bei der Metallisierung und werden aus Folien mit Löchern Etikette hergestellt, so sind diese als unbrauchbar auszusortieren. Um die Ausschussrate klein zu halten, ist eine sehr geringe Lochanzahl in den Kunststoff-Folien anzustreben. Die Anzahl von Löchern mit einem Durchmesser von 2 mm bis zu 6 mm pro 1000 m² Folienfläche muss kleiner und darf höchstens gleich 10 sein. Ähnliches gilt für die Anzahl von Löchern mit einem Durchmesser größer 6 mm bis 50 mm pro 1000 m² Folienfläche. Deren Anzahl ist kleiner/gleich 5.

Die hohen Anforderungen an die Qualität von Kunststoff-Folien 1 und 3, die zu Rundumetiketten verarbeitet werden, ergeben sich durch die große Anzahl von Verfahrensschritten, die für die Herstellung von Rundumetiketten durchlaufen werden müssen. Diese Verarbeitungsschritte sind das Kalandrieren der Folie, das Metallisieren, eventuelles Lackieren der metallisierten Folie mit einem Lack, Beschichten und Kaschieren der Folie, Schneiden, Bedrucken und Kaschieren der bedruckten Folie, Erstellen der Rundumetiketten und Aufschrumpfen der Etikette auf zylindrische Körper, beispielsweise auf zylindrische Trockenbatterien.

Die Kunststoff-Folien 1 und 3 sind bevorzugt glasklar und können, falls dies erwünscht ist, auch eingefärbt sein. Zur Verbesserung der Verarbeitbarkeit enthalten sie bevorzugt ein Gleitmittel.

Die Kunststoff-Folien 1 und 3 werden in bekannter Weise aus Hartpolyvinylchlorid kalandriert und bei Temperaturen von 180 bis 60 °C gereckt. Die Reckung erfolgt in Maschinenlaufrichtung des Kalanders, wobei die Dimensionsänderung in Längsrichtung der Kunststoff-Folien 1 bzw. 3 40 bis 60 % der Länge der ungereckten Kunststoff-Folien beträgt. Während der thermischen Reckung in Maschinenlaufrichtung wird die Kunststoff-Folie 1, 3 in Querrichtung fixiert. Dies geschieht in der Weise, dass die Kunststoff-Folie 1 bzw. 3 durch Anpressen gegen Transportrollen 6, 7 mittels Anpressrollen 8, 9 (s. Fig. 4) in ihrer Querrichtung fixiert wird. Der negative thermische Querschrumpf der Kunststoff-Folien 1 und 3 ist dadurch sehr klein und liegt im Bereich von 0 bis 10 % der ungereckten Folie. Durch die thermische Reckung in Maschinenlaufrichtung, die mit der Längsrichtung der Kunststoff-Folie 1 bzw. 3 übereinstimmt und durch die Fixierung der Kunststoff-Folie 1, 3 in Querrichtung, ist es möglich, den thermischen Schrumpf in Querrichtung auf 0 bis 10 % der Breite der ungereckten Kunststoff-Folie einzustellen.

Schrumpfbare Rundumetikette, die selbstklebend sind, werden in verschiedenen Konfigurationen verwendet. Das Rundumetikett kann laminiert sein und eine Metallisierungsschicht oder einzelne Metallisierungen sowie gedruckte grafische Darstellungen zwischen zwei Schichten enthalten, falls die Kunststoff-Folie 1 gemäß dem ersten Ausführungsbeispiel nach Fig. 1 angewandt wird. Wird für das Rundumetikett eine Monofolie gemäß der zweiten Ausführungsform gemäß Fig. 2 verwendet, so können Drucke 16 in Gestalt grafischer Abbildungen auf der Oberseite oder Unterseite der Kunststoff-Folie 3 angebracht sein. Zum Schutz dieser grafischen Abbildungen auf der Oberseite wird dann auf die Oberfläche der Abbildungen ein geeigneter Lack oder eine sonstige schützende Schicht aufgetragen.

In Fig. 5 ist ein Rundumetikett 11 gezeigt, das auf einen Zylinderkörper 10 aufgebracht wird, bei dem es sich beispielsweise um eine Trockenbatterie handelt. Das Rundumetikett 11 ist zur besseren Übersichtlichkeit teilweise auf dem Zylinderkörper aufgerollt dargestellt. Der auf den Zylinderkörper 10 aufgeklebte Teil des Rundumetiketts haftet mittels einer Klebeschicht. Das Rundumetikett 11 ist in Längsrichtung, angezeigt durch den Doppelpfeil A, thermisch schrumpfbar. In Querrichtung, angezeigt durch den Doppelpfeil B steht das Rundumetikett 11 mit Randbereichen 13 und 14 über die Längsausdehnung des Zylinderkörpers 10 über. Am oberen Rand des Rundumetiketts 11 befindet sich ein Haftklebestreifen 12, der nach dem vollständigen Aufrollen bzw. Umwickeln des Zylinderkörpers 10 mit dem Rundumetikett 11 die Verklebung entlang der Mantellinie des Rundumetiketts 11 ermöglicht. Durch die überstehenden Randbereiche 13 und 14 werden die Stirnflächen bzw. Endflächen des Zylinderkörpers 10 beim Aufschrumpfen des Rundumetiketts 11 teilweise umschlossen bzw. umhüllt. Da der Querschrumpf in Richtung des Doppelpfeils B des Rundumetiketts 11 sehr gering ist, nämlich wie zuvor beschrieben im Bereich von 0 bis 10 % liegt, ist sichergestellt, dass nach dem Aufschrumpfen die Endflächen des Zylinderkörpers 10 auch weiterhin von dem Rundumetikett 11 abgedeckt sind und im Mittelbereich des Zylinderkörpers 10, in dem sich im Falle einer Trockenbatterie der eine Batteriepol 15 befindet, das Rundumetikett 11 dicht an diesem anliegt. Sowie das Rundetikett 11, dessen großer thermischer Schrumpf in Längsrichtung, d. h. in Richtung des Doppelpfeils A gegeben ist, um den Zylinderkörper 10 herumgerollt ist und mittels des Haftklebestreifens 12 fixiert ist, erfolgt in einem nicht gezeigten Schrumpftunnel ein Aufheizen und ein dementsprechend bewirktes thermisches Schrumpfen des Rundumetiketts 11. Das Rundumetikett 11, wie schon erwähnt, umschrumpft im Fall einer Trockenbatterie den Batteriepol 15 in Folge des thermischen Schrumpfes in Längsrichtung des Rundumetiketts 11.

Bei einem zweilagigen Rundumetikett 11 wird der thermische Schrumpf überwiegend von der Kunststoff-Folie 1 bestimmt, während die Abdeckfolie 2 so ausgelegt ist, dass sie in etwa ein ähnliches oder gleiches Schrumpfverhalten wie die Kunststoff-Folie 1 besitzt. Sie kann insbesondere auch einen geringeren Schrumpf als die Kunststoff-Folie 1 besitzen.

Besteht das Rundumetikett 11 aus einer Monofolie, so ist es vor allem erforderlich, dass der negative Querschrumpf größer als 0 % ist, nämlich im Bereich von etwa 5 bis 8 % liegt. Wird eine derartige Monofolie, nämlich die Kunststoff-Folie 3 bedruckt, so kommt es beim Bedrucken zu einer Vernetzung, die dem Schrumpf entgegenwirkt. Insofern hat eine derartige Monofolie mit einer Dicke von 50 bis 60 µm ein anderes Schrumpfverhalten als die dünnere Kunststoff-Folie 1, bei der nach Möglichkeit der Querschrumpf etwa 0 % betragen soll. Das Schrumpfverhalten bei der Monofolie wird von einer Druckfarbenschicht auf der Unterseite der Monofolie behindert. Um dies zu kompensieren, ist ein etwas größerer thermischer Querschrumpf der Monofolie 3 im Vergleich mit der Folie 1 erforderlich.

## Patentansprüche

1. Kalandrierte Kunststoff-Folie aus Hartpolyvinylchlorid (HPVC), geeignet als Trägerfolie für auf Umfangsflächen von Zylinderkörpern aufklebbare und aufschrumpfbare Rundumetiketten, **dadurch gekennzeichnet, dass** die Kunststoff-Folie (1;3)eine Folienbreite bis zu 2010 mm hat, in Maschinenlaufrichtung eines Kalanders bei einer Temperatur von 60°C bis 180°C gereckt ist und einen positiven thermischen Schrumpf von 40 bis 60 % bei einer Temperatur von 115° C bis 125 °C über eine Zeitspanne von 15 Minuten in ihrer zur Maschinenlaufrichtung parallelen Laufrichtung aufweist.

2. Kalandrierte Kunststoff-Folie nach Anspruch 1, **dadurch gekennzeichnet, dass** sie quer zur Maschinenlaufrichtung des Kalanders bei einer Temperatur von 115°C bis 125 °C über eine Zeitspanne von 15 Minuten einen negativen thermischen Schrumpf 0 bis 10 % aufweist.

3. Kalandrierte Kunststoff-Folie nach Anspruch 1, **dadurch gekennzeichnet, dass** quer zur Maschinenlaufrichtung des Kalanders ein positiver thermischer Schrumpf der Kunststoff-Folie (1; 3) 0 bis 2 % beträgt.

4. Kalandrierte Kunststoff-Folie nach Anspruch 1, **dadurch gekennzeichnet, dass** eine thermische Reckung der Kunststoff-Folie (1; 3) quer zur Maschinenlaufrichtung des Kalanders gleich null ist.

5. Kalandrierte Kunststoff-Folie nach einem der Ansprüche 1 bis 4, **dadurch gekennzeichnet, dass** ihre Dicke 22,5 bis 66 µm beträgt.

6. Kalandrierte Kunststoff-Folie nach einem der Ansprüche 1 bis 5, **dadurch gekennzeichnet, dass** die Anzahl von Löchern mit einem Durchmesser von 2 mm bis zu 6 mm pro 1000 m² Folienfläche kleiner/gleich zehn ist.

7. Kalandrierte Kunststoff-Folie nach einem der Ansprüche 1 bis 6, **dadurch gekennzeichnet, dass** die Anzahl von Löchern mit einem Durchmesser von größer 6 mm bis 50 mm pro 1000 m² Folienfläche kleiner/gleich fünf ist.

8. Kalandrierte Kunststoff-Folie nach einem der Ansprüche 1 bis 7, **dadurch gekennzeichnet, dass** sie in Längsrichtung gereckt ist, die mit der Maschinenlaufrichtung eines Kalanders übereinstimmt und dass sie in Querrichtung während der Reckung in Längsrichtung fixiert ist.

9. Kalandrierte Kunststoff-Folie nach einem der Ansprüche 1 bis 8, **dadurch gekennzeichnet, dass** sie glasklar ist.

10. Kalandrierte Kunststoff Folie nach einem der Ansprüche 1 bis 8, **dadurch gekennzeichnet, dass** sie weiß eingefärbt ist.

11. Kalandrierte Kunststoff-Folie nach einem der Ansprüche 1 bis 10, **dadurch gekennzeichnet, dass** sie zur Verbesserung ihrer Verarbeitbarkeit ein Gleitmittel enthält.

12. Kalandrierte Kunststoff-Folie nach einem der Ansprüche 1 bis 11, **dadurch gekennzeichnet, dass** auf der Ober- oder Unterseite eine Metallisierungsschicht aus Aluminium oder einem sonstigen Metall oder einer Metall-Legierung aus der Gruppe Kupfer, Messing, Bronze aufgebracht ist.

13. Kalandrierte Kunststoff-Folie nach Anspruch 5, **dadurch gekennzeichnet, dass** sie eine Monofolie mit einer Dicke von 50 oder 60 µm, mit jeweils einer Dickentoleranz von ± 10 %, ist.

14. Kalandrierte Kunststoff-Folie nach Anspruch 5, **dadurch gekennzeichnet, dass** sie eine Dicke von 25 µm, 35 µm bzw. 37 µm aufweist und dass jeweils eine Abdeckfolie (2) aus Hartpolyvinylchlorid mit einer Dicke von 25 µm, 20 µm bzw. 10 bis 20 µm auf die Oberseite der Kunststoff-Folie (1) auflaminiert ist.

15. Verfahren zum Kalandrieren und thermischen Recken einer Kunststoff-Folie aus Hartpolyvinylchlorid (HPVC) nach einem der Ansprüche 1 bis 14, **dadurch gekennzeichnet, dass** die Reckung in Maschinenlaufrichtung des Kalanders bei einer Temperatur von 60 °C bis 180 °C vorgenommen wird und dass die Dimensionsänderung in Längsrichtung der Kunststoff-Folie 40 bis 60 % der Länge der ungereckten Kunststoff-Folie beträgt.

16. Verfahren nach Anspruch 15, **dadurch gekennzeichnet, dass** während der thermischen Reckung in Maschinenlaufrichtung die Kunststoff-Folie in Querrichtung fixiert wird.

17. Verfahren nach Anspruch 16, **dadurch gekennzeichnet, dass** die Kunststoff-Folie durch Anpressen gegen Transportrollen, über die sie geführt wird, in ihrer Querrichtung fixiert wird.

18. Verfahren nach den Ansprüchen 15 bis 17, **dadurch gekennzeichnet, dass** durch die thermische Reckung in Maschinenlaufrichtung, die mit der Längsrichtung der Kunststoff-Folie übereinstimmt und die Fixierung der Kunststoff-Folie in Querrichtung, ein thermischer Schrumpf in Querrichtung von 0 bis 10 % der Breite der ungereckten Kunststoff-Folie eingestellt wird.

## Claims

1. Calendered plastics film composed of rigid polyvinyl chloride (RPVC) suitable as backing film for adhesive-bondable, shrinkable sleeve labels which can be applied by onto a peripheral surface of a cylindrical body, wherein the plastics film (1;3), which has a width up to 2010 mm, has been stretched in the machine running direction of a calender at a temperature of from 60 °C to 180 °C, and has a positive heat shrinkage of from 40 to 60 % at a temperature from 115 °C to 125 °C over a period 15 min parallel to the machine running direction

2. Calendered plastics film as claimed in claim 1, wherein perpendicularly to the machine running direction of the calender over a period of 15 minutes at a temperature of 115 °C to 125 °C the negative heat shrinkage of the plastics film is from 0 to 10 %.

3. Calendered plastics film as claimed in claim 1, wherein perpendicularly to the machine running direction of the calender the plastics film (1; 3) has a positive heat shrinkage of from 0 to 2 %.

4. Calendered plastics film as claimed in claim 1, wherein the heat-stretching value for the plastics film (1; 3) perpendicularly to the machine direction of the calender is zero.

5. Calendered plastics film as claimed in any of claims 1 to 4, whose thickness is from 22.5 to 66 µm.

6. Calendered plastics film as claimed in any of claims 1 to 5, wherein the number of holes with a diameter of from 2 to 6 mm is smaller than or equal to ten per 1 000 m² of film surface.

7. Calendered plastics film as claimed in any of claims 1 to 6, wherein the number of holes with a diameter of from greater than 6mm to 50 mm per 1000 m² of film surface is smaller than or equal to five.

8. Calendered plastics film as claimed in any of claims 1 to 7, which has been calendered and stretched in longitudinal direction, which corresponds with the machine direction of a calender, and which has been transversely set during the longitudinal stretching.

9. Calendered plastics film as claimed in any of claims 1 to 8, which is glass-clear.

10. Calendered plastics film as claimed in any of claims 1 to 9, which has been colored white.

11. Calendered plastics film as claimed in any of claims 1 to 11, which comprises a lubricant for improving its processability.

12. Calendered plastics film as claimed in any one of claims 1 to 11, whose upper or lower side comprises a metallizing layer composed of aluminum or of another metal or of a metal alloy, selected from the group copper, brass, bronze.

13. Calendered plastics film as claimed in claim 5, which is a monofilm whose thickness is 50 or 60 µm, the thickness tolerance in each case being ± 10 %.

14. Calendered plastic film as claimed in claim 5, whose thickness is 25, 35, or 37 µm, and in each case a protective covering film (2) composed of rigid polyvinyl chloride, with a thickness of 25, 20 and, respectively, from 10 to 20 µm has been applied by lamination to the upper side of the plastics film (1).

15. Process for calendering and heat-stretching of a plastics film composed of rigid polyvinyl chloride (RPVC), as claimed in any one of claims 1 to 14, wherein the stretching in the machine running direction of the calender takes place at a temperature of 60 °C to 180 °C, and that changing the dimension of the plastics film longitudinally is from 40 to 60 % of the length of the unstretched plastics film.

16. Process as claimed in claim 15, wherein, during the heat-stretching in the machine direction, the plastics film is set transversely.

17. Process as claimed in claim 16, wherein the plastics film is transversely set via pressing against transport rollers over which it is passed.

18. Process as claimed in claims 15 to 17, wherein a transverse heat shrinkage of from 0 to 10 % of the width of the unstretched plastics film is established via the thermal stretching in the machine running direction, i.e. the longitudinal direction of the plastics film, and the transverse setting of the plastics film.

## Revendications

1. Feuille synthétique calandrée en polychlorure de vinyle rigide (PVCR), convenant comme feuille de support pour des étiquettes circulaires collables et rétractables sur des surfaces périphériques de corps cylindriques, **caractérisée en ce que** la feuille synthétique (1; 3) présente une largeur de feuille allant jusqu'à 2010 mm, est étirée dans le sens de marche d'une machine de calandre à une température de 60 °C à 180 °C et présente un retrait thermique positif de 40 à 60 % à une température de 115 °C à 125 °C sur un intervalle de temps de 15 minutes dans sa direction parallèle au sens de marche de la : <A> machine.

2. Feuille synthétique calandrée selon la revendication 1, **caractérisée en ce qu'**elle présente un retrait thermique positif de 0 à 10 % transversalement au sens <A> machine de la calandre, à une température de 115 °C à 125 °C sur un intervalle de temps de 15 minutes.

3. Feuille synthétique calandrée selon la revendication 1, **caractérisée en ce que**, transversalement au sens <A> machine de la calandre, un retrait thermique positif de la feuille synthétique (1; 3) atteint 0 à 2 %.

4. Feuille synthétique calandrée selon la revendication 1, **caractérisée en ce qu'**un étirage thermique de la feuille synthétique (1; 3) transversalement au sens <A> machine de la calandre est égal à zéro.

5. Feuille synthétique calandrée selon l'une quelconque des revendications 1 à 4, **caractérisée en ce que** son épaisseur est de 22,5 à 66 µm.

6. Feuille synthétique calandrée selon l'une quelconque des revendications 1 à 5, **caractérisée en ce que** le nombre de trous d'un diamètre de 2 mm à 6 mm par 1000 m² de surface de feuille est inférieur ou égal à dix.

7. Feuille synthétique calandrée selon l'une quelconque des revendications 1 à 6, **caractérisée en ce que** le nombre de trous d'un diamètre de plus de 6 mm jusqu'à 50 mm par 1000 m² de surface de feuille est inférieur ou égal à cinq.

8. Feuille synthétique calandrée selon l'une quelconque des revendications 1 à 7, **caractérisée en ce qu'**elle est étirée dans la direction longitudinale qui coïncide avec le sens <A> machine d'une calandre et **en ce qu'**elle est fixée dans la direction transversale pendant l'étirage dans la direction longitudinale.

9. Feuille synthétique calandrée selon l'une quelconque des revendications 1 à 8, **caractérisée en ce qu'**elle est transparente.

10. Feuille synthétique calandrée selon l'une quelconque des revendications 1 à 8, **caractérisée en ce qu'**elle est de couleur blanche.

11. Feuille synthétique calandrée selon l'une quelconque des revendications 1 à 10, **caractérisée en ce qu'**elle contient un lubrifiant pour améliorer son ouvrabilité.

12. Feuille synthétique calandrée selon l'une quelconque des revendications 1 à 11, **caractérisée en ce qu'**on applique, sur la face supérieure ou la face inférieure, une couche de métallisation en aluminium ou dans un autre métal ou dans un alliage métallique choisi dans le groupe constitué du cuivre, du laiton et du bronze.

13. Feuille synthétique calandrée selon la revendication 5, **caractérisée en ce qu'**elle se présente sous la forme d'une monofeuille d'une épaisseur de 50 ou 60 µm, avec respectivement une tolérance d'épaisseur de ± 10 %.

14. Feuille synthétique calandrée selon la revendication 5, **caractérisée en ce qu'**elle présente une épaisseur de 25 µm, 35 µm ou 37 µm et **en ce que**, respectivement, une feuille de couverture (2) en polychlorure de vinyle rigide d'une épaisseur de 25 µm, 20 µm ou de 10 à 20 µm est laminée sur la face supérieure de la feuille synthétique (1).

15. Procédé de calandrage et d'étirage thermique d'une feuille synthétique en polychlorure de vinyle rigide (PVCR) selon l'une quelconque des revendications 1 à 14, **caractérisé en ce que** l'étirage est effectué dans le sens <A> machine de la calandre à une température de 60 °C à 180 °C et **en ce que** la modification de dimension dans la direction longitudinale de la feuille synthétique atteint 40 à 60 % de la longueur de la feuille synthétique non étirée.

16. Procédé selon la revendication 15, **caractérisé en ce que**, pendant l'étirage thermique dans le sens <A> machine, la feuille synthétique est fixée dans la direction transversale.

17. Procédé selon la revendication 16, **caractérisé en ce que** la feuille synthétique est fixée dans la direction transversale en exerçant une pression contre les rouleaux de transport qui la guident.

18. Procédé selon les revendications 15 à 17, **caractérisé en ce que**, par étirage thermique dans le sens <A> machine, qui coïncide avec la direction longitudinale de la feuille synthétique, et par fixation de la feuille synthétique dans la direction transversale, on ajuste dans la direction transversale un retrait thermique de 0 à 10 % de la largeur de la feuille synthétique non étirée.
